# EUROPÄISCHE PATENTSCHRIFT

(11) **EP 1 356 219 B1**
(45) Veröffentlichungstag und Bekanntmachung des Hinweises auf die Patenterteilung: **01.09.2004**
(21) Anmeldenummer: 01986909.8
(22) Anmeldetag: 19.12.2001
(51) Int. Cl.: F16H 61/04

(54) **VERFAHREN ZUM STEUERN EINES SYNCHRONISIERTEN, AUTOMATISIERTEN SCHALTGETRIEBES**
METHOD FOR CONTROLLING A SYNCHRONISED AUTOMATED SHIFT GEARBOX
PROCEDE DE COMMANDE D'UNE BOITE DE VITESSES AUTOMATISEE

(30) Priorität: 23.01.2001 DE 10102757
(43) Veröffentlichungstag der Anmeldung: 29.10.2003
(73) Patentinhaber: Volkswagen Aktiengesellschaft, 38436 Wolfsburg (DE)
(72) Erfinder: BOTHE, Edgar, 31224 Peine (DE); HINRICHSEN, Uwe, 38124 Braunschweig (DE); BECKER, Volker, 38518 Gifhorn (DE)
(86) Internationale Anmeldenummer: PCT/EP2001/015078
(87) Internationale Veröffentlichungsnummer: WO 2002/059506

(56) Entgegenhaltungen:
- DE-A- 19 725 511
- DE-C- 19 806 149

## Beschreibung

Die Erfindung betrifft ein Verfahren zum Steuern eines synchronisierten, automatisierten Schaltgetriebes mit den im Oberbegriff des Anspruchs 1 genannten Merkmalen.

Bei einem mit einer Brennkraftmaschine und einem synchronisierten, automatisierten Schaltgetriebe versehenen Kraftfahrzeug erfolgt die Anpassung der Motordrehzahl an unterschiedliche Betriebszustände durch entsprechende Gangstufen. Automatisierte Schaltgetriebe und die darunter zählenden Doppelkupplungsgetriebe für Kraftfahrzeuge verfügen in der Regel über Gangsteller, mit denen über Synchronisierungen und Schiebemuffen Gänge eingelegt werden. Um einen Gang einzulegen, muss eine Synchronisation der Drehzahl der Eingangswelle des Getriebes mit der Drehzahl der Abtriebswelle erfolgen. Erst wenn beide Wellen synchron laufen, kann eine Schiebemuffe über eine Kupplungsverzahnung geschoben werden und damit der Gang im Schaltgetriebe eingelegt werden. Diese Aufgabe übernimmt die Synchronisierung.

Probleme ergeben sich insbesondere dann, wenn mittels derartiger Getriebe aus dem Fahrzeugstillstand oder bei langsam rollendem Fahrzeug aus einer Getriebe-Neutral-Stellung in eine vorgegebene Anfahrstufe gewechselt werden soll. Dabei kann zwischen der Drehzahl der Eingangswelle des Getriebes und der Drehzahl der Abtriebswelle des Getriebes eine wesentliche Drehzahldifferenz bestehen. Während die Abtriebswelle bei einem Fahrzeugstillstand keine Drehzahl aufweist, kann die Eingangswelle des Getriebes auch bei geöffneter Kupplung infolge der so genannten Schleppmomente der Anfahrkupplung eine entsprechende Drehzahl aufweisen. Die Drehzahl der Eingangswelle des Getriebes kann dabei zwischen Stillstand und der Leerlaufdrehzahl des Motors liegen. Die Schleppmomente sind in der Regel bei nassen Kupplungen wie Ölbadkupplungen höher als bei Trockenkupplungen. Die rotierenden Massen des Getriebes, die zum Einlegen des Anfahrganges abgebremst werden müssen, sind Ursache für einen sogenannten Schaltstoß.

Aus der DE 197 25 511 A1 ist für ein derartiges Getriebe ein Verfahren zur Vermeidung eines Schalt- beziehungsweise Anfahrstoßes beim Einschalten einer Anfahrstufe bekannt. Gemäß diesem Verfahren wird bei geöffneter Fahrkupplung und eingeschalteter Anfahrstufe die Drehzahl der Antriebswelle des Getriebes zunächst auf eine Rest- beziehungsweise Übernahmedrehzahl abgebremst. In zumindest einem weiteren Schritt wird dann die Restdrehzahl vollständig synchronisiert. Die Abbremsung der Drehzahl der Antriebswelle des Getriebes in der ersten Stufe erfolgt dabei durch mehrfach hintereinander durchgeführte Betätigung der Synchronisiereinrichtung des Getriebes.

Der Nachteil eines derartigen Verfahrens zur Vermeidung eines Schaltbeziehungsweise Anfahrstoßes beim Schaltvorgang in eine Anfahrstufe besteht darin, dass zur Abbremsung der Drehzahl der Getriebeeingangswelle auf Synchronisationsdrehzahl mit der Getriebeabtriebswelle ein relativ langer Zeitraum benötigt wird, bevor das Einlegen eines Ganges durch die Steuerung erfolgen kann. Beim Einlegen einer Fahrstufe zur Realisierung eines Anfahrvorganges erwartet der Fahrer, dass der Gang durch die Steuerung möglichst schnell im Schaltgetriebe eingelegt wird und ihm sofort ein Vortriebsmoment zur Verfügung steht. Diese Forderung kann mit der im Stand der Technik dargelegten Lösung nicht realisiert werden.

Der Erfindung liegt daher die Aufgabe zugrunde, ein Verfahren zum Steuern für ein synchronisiertes, automatisiertes Schaltgetriebe zu schaffen, mit dem ein Schaltstoß beim Schalten des Getriebes aus einer Getriebe-Neutral-Stellung in eine vorgegebene Anfahrstufe weitestgehend vermieden wird und mit dem ein schnelles Einlegen eines Ganges aus der Getriebe-Neutral-Stellung in eine vorgegebene Gangstufe durch die Steuerung im Schaltgetriebe erfolgen kann.

Diese Aufgabe wird durch ein Verfahren zum Steuern eines synchronisierten, automatisierten Schaltgetriebes mit den in dem Anspruch 1 genannten Merkmalen gelöst. Dadurch, dass zur Vermeidung eines Schaltstoßes beim Schalten des Getriebes aus einer Getriebe-Neutral-Stellung in eine vorgegebene Anfahrstufe
(a) während der Getriebe-Neutral-Stellung durch eine Steuereinrichtung eine Ansteuerung des Gangstellers des Schaltgetriebes zur Abbremsung der Drehzahl der Getriebeeingangswelle auf Synchronisationsdrehzahl mit einer Getriebeabtriebswelle erfolgt;
(b) ein Durchschalten während der Getriebe-Neutral-Stellung durch die Steuereinrichtung verhindert wird;
(c) beim Schaltvorgang aus der Getriebe-Neutral-Stellung in eine vorgegebene Anfahrstufe durch die Steuereinrichtung eine Ansteuerung des Gangstellers des Schaltgetriebes zur entsprechenden Gangeinstellung im Schaltgetriebe erfolgt,
wird ein schnelles Einlegen eines Ganges aus der Getriebe-Neutral-Stellung in eine vorgegebene Gangstufe durch die Steuerung im Schaltgetriebe erreicht. Die Synchronität der Drehzahl von Getriebeeingangswelle und Getriebeabgangswelle wird bereits in der Getriebe-Neutral-Stellung hergestellt. Das hat den Vorteil, dass in dieser Phase, in der vom Fahrer keine Zugkraft erwartet wird, eine vorhandene Differenzdrehzahl zwischen der Getriebeeingangswelle und der Getriebeabgangswelle langsam und komfortabel abgebaut werden kann. Es wird eine Synchronität zwischen Getriebeeingangswelle und Getriebeabgangswelle erreicht, ohne dass dabei bereits eine starre Verbindung zwischen den beiden Wellen hergestellt wird. Soll ein Gang eingelegt werden, so kann der Gangsteller innerhalb kürzester Zeit in die entsprechende Position gebracht werden, wobei eine formschlüssige Verbindung zwischen Getriebeeingangswelle und Getriebeabgangswelle erfolgt. Über das Schaltgetriebe steht sehr schnell ein entsprechendes Vorschubmoment zur Verfügung. Schaltstöße werden dabei vermieden.

In einer bevorzugten Ausgestaltung der Erfindung erfolgt die Abbremsung der Drehzahl der Getriebeeingangswelle auf Synchronisationsdrehzahl mit der Getriebeabtriebswelle über die Synchronisierung einer Übersetzungsstufe des Schaltgetriebes. Durch diese Maßnahme wird erreicht, dass zur Abbremsung und zur Synchronisation der Getriebeeingangswelle mit der Getriebeabtriebswelle keine zusätzlichen Einrichtungen benötigt werden.

Weitere bevorzugte Ausgestaltungen der Erfindung ergeben sich aus den übrigen, in den Unteransprüchen genannten Merkmalen.

Die Erfindung wird nachfolgend in einem Ausführungsbeispiel näher erläutert.

Die Erfindung betrifft ein Verfahren zum Steuern eines synchronisierten, automatisierten Schaltgetriebes, Doppelkupplungsgetriebe oder dergleichen, das jeweils über einen Drehmomentwandler oder eine oder mehrere Kupplungen oder mit einem Antriebsmotor eines Kraftfahrzeuges verbunden ist. Durch die Wahl eines entsprechenden Übersetzungsverhältnisses des Schaltgetriebes erfolgt eine Angleichung der benötigten Zugkraft zur Fortbewegung des Fahrzeuges an das vorliegende Drehmomentangebot.

Die erfindungsgemäße Steuerung eines synchronisierten, automatisierten Schaltgetriebes sieht vor, dass schon in der Getriebe-Neutral-Stellung eine Synchronisation von Getriebeeingangswelle und Getriebeausgangswelle des Schaltgetriebes über die Synchronisierung des Schaltgetriebes erfolgt. Dabei muss die sich drehende Getriebeeingangswelle mit der Drehzahl der Getriebeausgangswelle synchronisiert werden. Während der Getriebe-Neutral-Stellung erfolgt durch eine Steuereinrichtung eine Ansteuerung des Gangstellers des Schaltgetriebes zur Abbremsung der Drehzahl der Getriebeeingangswelle auf Synchronisationsdrehzahl mit der Getriebeabtriebswelle. Die Abbremsung der Getriebeeingangswelle auf Synchronisationsdrehzahl mit der Getriebeabtriebswelle erfolgt dabei durch die vorhandene Synchronisierung des Schaltgetriebes. Da in der Getriebe-Neutral-Stellung keine vom Getriebe ausgehende Abtriebskraft erwartet wird, kann eine vorhandene Drehzahldifferenz zwischen der Getriebeeingangswelle und der Getriebeabtriebswelle über die Synchronisierung einer Übersetzungsstufe langsam und komfortabel abgebaut werden. Ist eine Synchronität zwischen den beiden Getriebewellen vorhanden, wird durch die Steuereinrichtung verhindert, dass die Schiebemuffe des Schaltgetriebes durch den Synchronring gleitet und damit einen Gang einlegt.

Schließt die Kupplung in dieser Phase durch einen Defekt, rollt das Fahrzeug nicht an, da über die Synchronisierung nur ein sehr kleines Moment übertragen wird.

Die Abbremsung der Drehzahl der Getriebeeingangswelle auf Synchronisationsdrehzahl mit der Getriebeabtriebswelle erfolgt über den gesamten Zeitraum der Getriebe-Neutral-Stellung, so dass zwar eine entsprechende Synchronität zwischen den Getriebewellen vorliegt, aber ein Durchschalten und damit eine Wirkverbindung zwischen Getriebeeingangs- und Getriebeabtriebswelle vermieden wird.

Erst bei einem Wechsel des Wählhebels in eine Fahrposition erfolgt durch die Steuereinrichtung eine Ansteuerung des Gangstellers des Schaltgetriebes zum Einlegen der entsprechenden Anfahrstufe. Aufgrund der vorhandenen Synchronisation zwischen der Getriebeeingangswelle und der Getriebeabtriebswelle kann der Gangsteller innerhalb kürzester Zeit, zum Beispiel innerhalb 100 ms, in die Einlegeposition gebracht werden, ohne dass dabei ein Schaltstoß auftritt. Dem Fahrer steht nach dem entsprechend durchgeführten Schaltvorgang schnell ein entsprechendes Vortriebsmoment zur Verfügung. Mit Hilfe dieser Erfindung kann vom Fahrer aus der Getriebe-Neutral-Stellung ein Gang komfortabel und schnell eingelegt werden, ohne dass dabei ein Schaltstoß auftritt. Somit wird insgesamt der Einlegekomfort und die Spontanität beim Wechsel aus der Neutralstellung in eine Fahrposition verbessert.

Zur Realisierung der entsprechenden Steuerung sind die Steuereinrichtung des Schaltgetriebes und der Gangsteller mit Sensoren zur Erfassung des Betriebszustandes versehen. Bei diesen Sensoren handelt es sich um Drehzahlsensoren und Wegsensoren, die bei modernen Konzepten in der Regel vorhanden sind, so dass kein zusätzlicher Aufwand entsteht.

Der Vorteil der erfindungsgemäßen Lösung besteht darin, dass beim Schalten des Getriebes aus einer Getriebe-Neutral-Stellung in eine vorgegebene Anfahrstufe ein Schaltstoß bei einem schnellen Einlegen des Ganges durch die Steuerung vermieden wird. Der Einlegekomfort und die Spontanität beim Wechseln aus der Neutralstellung in eine Fahrposition werden insgesamt verbessert.

## Patentansprüche

1. Verfahren zum Steuern eines synchronisierten, automatisierten Schaltgetriebes, das über einen Drehmomentwandler oder eine oder mehrere Kupplungen mit einem Antriebsmotor verbunden ist, wobei eine vorgegebene Gangstufe von der elektronischen Steuereinrichtung im Schaltgetriebe geschaltet wird, **dadurch gekennzeichnet, dass** zur Vermeidung eines Schaltstoßes beim Schalten des Getriebes aus einer Getriebe-Neutral-Stellung in eine vorgegebene Anfahrstufe
(a) während der Getriebe-Neutral-Stellung durch eine Steuereinrichtung eine Ansteuerung auf einen Gangsteller des Schaltgetriebes zur Abbremsung der Drehzahl der Getriebeeingangswelle auf Synchronisationsdrehzahl mit einer Getriebeabtriebswelle erfolgt;
(b) ein Durchschalten während der Getriebe-Neutral-Stellung durch die Steuereinrichtung verhindert wird;
(c) beim Schaltvorgang aus der Getriebe-Neutral-Stellung in eine vorgegebene Anfahrstufe durch die Steuereinrichtung eine Ansteuerung auf den Gangsteller des Schaltgetriebes zur entsprechenden Gangeinstellung im Schaltgetriebe erfolgt.

2. Verfahren nach Anspruch 1, **dadurch gekennzeichnet, dass** die Abbremsung der Drehzahl der Getriebeeingangswelle auf Synchronisationsdrehzahl mit der Getriebeabtriebswelle über die Synchronisierung einer Übersetzungsstufe des Schaltgetriebes erfolgt.

3. Verfahren nach einem der vorhergehenden Ansprüche, **dadurch gekennzeichnet, dass** die Abbremsung der Drehzahl der Getriebeeingangswelle auf Synchronisationsdrehzahl mit der Getriebeabtriebswelle über den gesamten Zeitraum der Getriebe-Neutral-Stellung erfolgt.

4. Verfahren nach einem der vorhergehenden Ansprüche, **dadurch gekennzeichnet, dass** die Verhinderung des Einlegens eines Ganges im Schaltgetriebe in der Getriebe-Neutral-Stellung mittels einer Wegregelung erfolgt.

5. Verfahren nach Anspruch 4, **dadurch gekennzeichnet, dass** der Sollwert der Wegregelung zur Ansteuerung der Steuereinrichtung aus einem Synchronvorgang ermittelt wird.

6. Verfahren nach einem der vorhergehenden Ansprüche, **dadurch gekennzeichnet, dass** die Steuereinrichtung des Schaltgetriebes und der Gangsteller zur Ansteuerung der Steuereinrichtung mit Sensoren zur Erfassung des Betriebszustandes versehen sind.

7. Verfahren nach einem der vorhergehenden Ansprüche, **dadurch gekennzeichnet, dass** die Steuerung für automatisierte Schaltgetriebe, wie automatische Schaltgetriebe, Direktschaltgetriebe, Doppelkupplungsgetriebe und dergleichen, erfolgt.

## Claims

1. Method for controlling a synchronized, automated shift gearbox which is connected to a drive engine by means of a torque converter or one or a plurality of clutches, a specified gear being selected by the electronic control device in the gearbox, **characterized in that**, in order to avoid a selection jolt when switching the gearbox from a gearbox neutral position into a specified drive-off gear,
(a) while the gearbox is in the neutral position, an actuation by a control device takes place on a gear selector of the shift gearbox to retard the speed of the gearbox input shaft to synchronization speed with a gearbox output shaft;
(b) a gear change is prevented by the control device while the gearbox is in the neutral position;
(c) when changing gear from the gearbox neutral position into a specified drive-off gear, an actuation by the control device to the corresponding gear setting in the shift gearbox takes place on the gear selector of the shift gearbox.

2. Method according to Claim 1, **characterized in that** the retardation of the speed of the gearbox input shaft to synchronization speed with the gearbox output shaft takes place by means of the synchronisation of a transmission stage of the shift gearbox.

3. Method according to one of the preceding claims, **characterized in that** the retardation of the speed of the gearbox input shaft to synchronisation speed with the gearbox output shaft takes place throughout the period when the gearbox is in the neutral position.

4. Method according to one of the preceding claims, **characterized in that** the engagement of a gear when the shift gearbox is in the neutral position is prevented by means of a displacement control.

5. Method according to Claim 4, **characterized in that** the required displacement control value for actuation of the control device is determined from a synchronous procedure.

6. Method according to one of the preceding claims, **characterized in that** the shift gearbox control device and the gear selector are provided with sensors recording the operating condition for actuating the control device.

7. Method according to one of the preceding claims, **characterized in that** the control takes place for automated shift gearboxes, such as automatic shift gearboxes, direct-shift gearboxes, double-clutch gearboxes and the like.

## Revendications

1. Procédé de commande d'une boîte de vitesses automatisée synchronisée qui est reliée à un moteur d'entraînement via un convertisseur de couple ou un ou plusieurs embrayages, un rapport de vitesse prédéterminé étant engagé par le dispositif de commande électronique dans la boîte de vitesses, **caractérisé en ce que**, pour éviter un choc de manoeuvre lors de l'engagement de la boîte de vitesses dans un rapport de conduite prédéterminé à partir d'une position neutre de la boîte de vitesses
(a) en position neutre de la boîte de vitesses grâce à un dispositif de commande, un pilotage d'un actionneur de rapport de la boîte de vitesses a lieu pour réduire la vitesse de rotation de l'arbre d'entrée de boîte à la vitesse de rotation pour la synchronisation avec un arbre de sortie de boîte ;
(b) un changement de rapport en position neutre de la boîte de vitesses est empêché grâce au dispositif de commande ;
(c) lors du passage de rapport, par le dispositif de commande, vers un rapport de conduite prédéterminé à partir de la position neutre de la boîte de vitesses, un pilotage de l'actionneur de rapport de la boîte de vitesses a lieu pour régler le rapport correspondant dans la boîte de vitesses.

2. Procédé selon la revendication 1, **caractérisé en ce que** la réduction de vitesse de rotation de l'arbre d'entrée de boîte à la vitesse de rotation de synchronisation avec l'arbre de sortie de boîte a lieu par la synchronisation d'un rapport de transmission de la boîte de vitesses.

3. Procédé suivant l'une quelconque des revendications précédentes, **caractérisé en ce que** la réduction de vitesse de rotation de l'arbre d'entrée de boîte à la vitesse de rotation de synchronisation avec l'arbre de sortie de boîte a lieu sur la durée totale au cours de laquelle la boîte de vitesses est en position neutre.

4. Procédé suivant l'une quelconque des revendications précédentes, **caractérisé en ce que** l'impossibilité d'engagement d'un rapport de boîte de vitesses en position neutre de la boîte de vitesses est assurée au moyen d'une régulation sur la position.

5. Procédé selon la revendication 4, **caractérisé en ce que** la valeur de consigne de la régulation sur la position en vue du pilotage du système de commande est déterminée à partir d'un processus de synchronisation.

6. Procédé suivant l'une quelconque des revendications précédentes, **caractérisé en ce que** le dispositif de commande de la boîte de vitesses et l'actionneur de rapport pour le pilotage du dispositif de commande sont équipés de capteurs qui détectent l'état de fonctionnement.

7. Procédé selon l'une quelconque des revendications précédentes, **caractérisé en ce que** la commande se produit pour une boîte de vitesses automatisée, telle qu'une boîte de vitesses automatique, une boîte de vitesses à prise directe, une boîte de vitesses à double débrayage et similaires.
